# EUROPEAN PATENT APPLICATION

(11) **EP 4 778 681 A1**
(43) Date of publication of application: **22.07.2026**
(21) Application number: 24865080.6
(22) Date of filing: 24.07.2024
(51) Int. Cl.: B25J 15/06, F16B 47/00

(54) **SUCTION PAD AND ARTICLE-HOLDING DEVICE**

(30) Priority: 13.09.2023 JP 2023148752
(71) Applicant: DAIFUKU CO., LTD., Osaka-shi, Osaka 555-0012 (JP)
(72) Inventor: YAMANARI, Hideaki, 529-1692 Shiga (JP); NISHINO, Syuzo, Osaka 555-0012 (JP)
(74) Representative: Meissner Bolte Partnerschaft mbB
(86) International application number: PCT/JP2024/026412
(87) International publication number: WO 2025/057573

(57) **Abstract**

In order to improve adsorbability with respect to an article, an adsorption pad (1) includes: a suction part (2) that has a first end (2a) connected to a pad attachment part (102); an adsorption part (3) that is connected to a second end (2b) of the suction part (2) and that has a first adsorption part (3a) that has an increasing diameter with its increasing distance from the suction part (2) and a second adsorption part (3b) that is folded at and extends from the first adsorption part (3a) toward the pad attachment part (102) and has an increasing diameter with its increasing distance from the first adsorption part (3a); and a shape maintaining part (4) that maintains a shape of the second adsorption part (3b) during non-adsorption of an article.

## Description

### Technical Field

The present disclosure relates to a suction pad (i.e., adsorption pad) and an article holding device.

### Background Art

In recent years, a picking device (transfer device) is used in factories, warehouses, etc., in order to efficiently sort various kinds of many articles according to shipment destinations. Such a picking device includes an adsorption pad that adsorbs an article (i.e., an object to be adsorbed), and is configured to transfer the article to a desired position while adsorbing the article with the adsorption pad.

With regard to this type of adsorption pad, Patent Literature 1 discloses an adsorption pad including a contact part that is provided with an elastic petal-shaped part separated by a plurality of recesses and that is configured to come into contact with an article.

### Citation List

### Patent Literature

Patent Literature 1
Japanese Patent Application Publication, Tokukai, No. 2020-89936

### Summary of Invention

### Technical Problem

However, the above-described conventional adsorption pad has room for improvement in adsorbability with respect to an article.

The present disclosure has an objective to provide an adsorption pad and an article holding device that can achieve improved adsorbability with respect to an article.

### Solution to Problem

In order to attain the above objective, an adsorption pad according to one aspect of the present disclosure is an adsorption pad that is attached to a pad attachment part having a suction port, the pad attachment part being included in an article holding device that holds an article, the adsorption pad including: a suction part that has a first end connected to the pad attachment part and that has a cylindrical bellows shape; an adsorption part that is connected to a second end of the suction part which second end is opposite to the first end and that adsorbs an article, the adsorption part having (a) a first adsorption part that is connected to the second end of the suction part and that has an increasing diameter with its increasing distance from the suction part and (b) a second adsorption part that is folded at and extends from the first adsorption part toward the pad attachment part and that has an increasing diameter with its increasing distance from the first adsorption part; and a shape maintaining part connected to the second adsorption part of the adsorption part so as to be arranged around the suction part, the shape maintaining part maintaining a shape of the second adsorption part during non-adsorption of the article.

An article holding device according to one aspect of the present disclosure is an article holding device that includes a pad attachment part having a suction port, the article holding device including an adsorption pad, the adsorption pad including a suction part that has a first end connected to the pad attachment part and that has a cylindrical bellows shape, an adsorption part that is connected to a second end of the suction part which second end is opposite to the first end and that adsorbs an article, the adsorption part having (a) a first adsorption part that is connected to the second end of the suction part and that has an increasing diameter with its increasing distance from the suction part and (b) a second adsorption part that is folded at and extends from the first adsorption part toward the pad attachment part and that has an increasing diameter with its increasing distance from the first adsorption part; and a shape maintaining part connected to the second adsorption part of the adsorption part so as to be arranged around the suction part, the shape maintaining part maintaining a shape of the second adsorption part during non-adsorption of the article.

### Advantageous Effects of Invention

In accordance with one aspect of the present disclosure, it is possible to provide an adsorption pad and an article holding device that can achieve improved adsorbability with respect to an article.

### Brief Description of Drawings

Fig. 1 is a perspective view illustrating an example configuration of a main part of an adsorption pad according to a first embodiment of the present disclosure and an article holding device employing the adsorption pad.
Fig. 2 is a sectioned end view illustrating an example configuration of a main part of the adsorption pad.
Fig. 3 is a sectioned end view illustrating example operation of the adsorption pad.
Fig. 4 is a sectioned end view illustrating another example operation of the adsorption pad.
Fig. 5 is a sectioned end view illustrating (a) an example configuration of a main part of an adsorption pad and a pad attachment part according to a second embodiment of the present disclosure and (b) example operation thereof.
Fig. 6 is a sectioned end view illustrating (a) an example configuration of a main part of a modification of the pad attachment part shown in Fig. 5 and (b) example operation thereof.
Fig. 7 is a sectioned end view illustrating example configurations of main parts of adsorption pads according to first and second modifications.

### Description of Embodiments

### First Embodiment

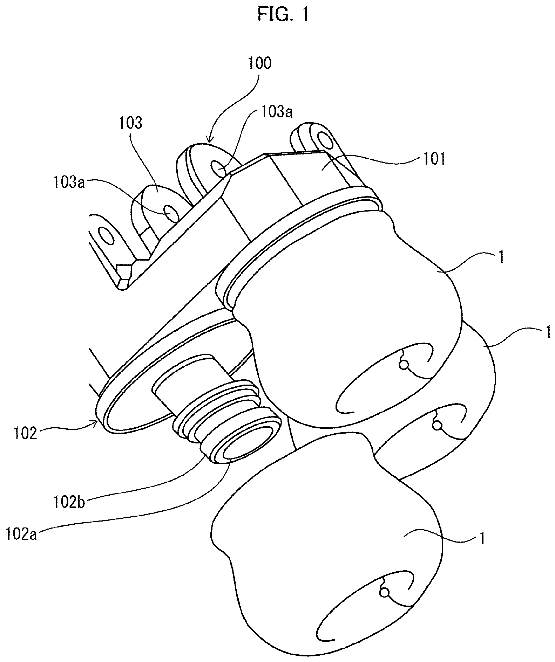

The following will describe a first embodiment of the present disclosure with reference to Figs. 1 to 4. The description below will discuss, as an example, a case where an adsorption pad and an article holding device according to the present disclosure are applied to a transfer device (picking device), such as a 5-axis robot, that transfers an article to a desired position. The following description deals with examples of the adsorption pad and the article holding device according to the present disclosure, and the technical scope of the present disclosure is not limited to the illustrated examples.

### Configuration of Article Holding Device

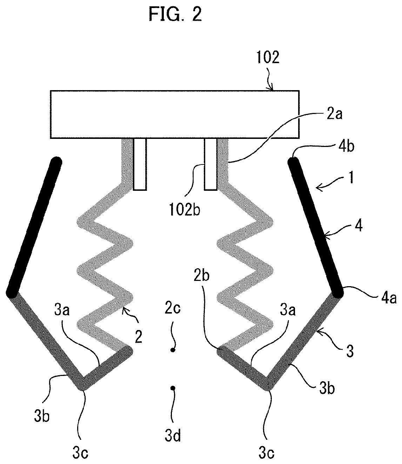

First, the following will describe, with reference to Figs. 1 and 2, an example configuration of an adsorption pad 1 according to the first embodiment. Fig. 1 is a perspective view illustrating an example configuration of a main part of the adsorption pad 1 according to the first embodiment of the present disclosure and an article holding device 100 that employs the adsorption pad 1. Fig. 2 is a sectioned end view illustrating an example configuration of a main part of the adsorption pad 1.

As illustrated in Fig. 1, the article holding device 100 according to the first embodiment includes a base part 101 and pad attachment parts 102. Further, as illustrated in Fig. 1, the article holding device 100 is provided with a plurality of adsorption pads 1, for example, three adsorption pads 1. Each of the three adsorption pads 1 according to the present disclosure is attached to the base part 101 via its respective pad attachment part 102. Each of the three pad attachment parts 102 has a suction port 102a that sucks air and an attachment member 102b that has a cylindrical shape. The article holding device 100 further includes a vacuum pump (not illustrated), and is configured to suck air through the suction port 102a.

By fitting the later-described suction part of the adsorption pad 1 to an outer peripheral surface of the attachment member 102b that protrudes from a surface of the pad attachment part 102 which surface is opposite to the base part 101, that adsorption pad 1 is attached to the attachment member 102b. In the article holding device 100, carrying out evacuation through the suction port 102a corresponding to the adsorption pad 1 pressed against an article causes elastic deformation of the adsorption pad 1 so that the adsorption pad 1 adsorbs and holds the article.

The base part 101 constitutes a base part of a picking head of the picking device. The base part 101 has holes 103a through which a tilt shaft provided to a tilt mechanism (not illustrated) is inserted. The base part 101 also has support parts 103 that are provided on a side opposite to the pad attachment part 102 and that rotatably support the tilt shaft inserted into the holes 103a.

The base part 101 is connected with a rotation mechanism (not illustrated) via the tilt shaft, the rotation mechanism having a rotation shaft and being configured to rotate the picking head. The article holding device 100 includes the 5-axis robot (XYZ direction axes + a rotation axis of the picking head + a tilt axis of the picking head). The article holding device 100 is configured such that the 5-axis robot appropriately changes positions of the three adsorption pads 1 so as to appropriately pick an article with at least one adsorption pad 1 and hold and transfer the article.

### Configuration of Adsorption Pad

As illustrated in Fig. 2, the adsorption pad 1 of the first embodiment includes a suction part 2, an adsorption part 3, and a shape maintaining part 4. The shape maintaining part 4 (described later) of the adsorption pad 1 is configured such that, while the adsorption pad 1 is not adsorbing an article (during non-adsorption of an article), the shape maintaining part 4 does not come into contact with the pad attachment part 102. In other words, during non-adsorption of an article, the shape maintaining part 4 of the adsorption pad 1 is in a floating state with respect to the pad attachment part 102.

### Configuration of Suction Part

The suction part 2 is made of, for example, an elastically deformable resin material such as a silicone resin. The suction part 2 is formed to have, for example, a cylindrical bellows shape, and has a first end 2a that is connected to the pad attachment part 102 and has a ring shape. Specifically, the first end 2a of the suction part 2 is fitted to the outer peripheral surface of the attachment member 102b from the outside. As a result, the suction part 2 is connected to the pad attachment part 102, so that the adsorption pad 1 is attached to the pad attachment part 102.

The suction part 2 has a second end 2b that is on a side opposite to the pad attachment part 102, that has a ring shape, and that has an opening 2c formed in an annular shape as seen in a plan view from the pad attachment part 102. The opening 2c serves as an air suction port in the adsorption pad 1.

### Configuration of Adsorption Part

The adsorption part 3 is made of, for example, an elastically deformable resin material such as a silicone resin. The adsorption part 3 is configured to be connected to the second end 2b of the suction part 2 which second end 2b is opposite to the first end 2a. Specifically, as illustrated in Fig. 2, the adsorption part 3 has (a) a first adsorption part 3a that is connected to the second end 2b of the suction part 2 and that has an increasing diameter with its increasing distance from the suction part 2 and (b) a second adsorption part 3b that is folded at and extends from the first adsorption part 3a toward the pad attachment part 102 and that has an increasing diameter with its increasing distance from the first adsorption part 3a.

In other words, the adsorption part 3 is constituted by the first adsorption part 3a and the second adsorption part, and has a folded part 3c that is folded at a lower end of the adsorption pad 1 and extends toward the pad attachment part 102.

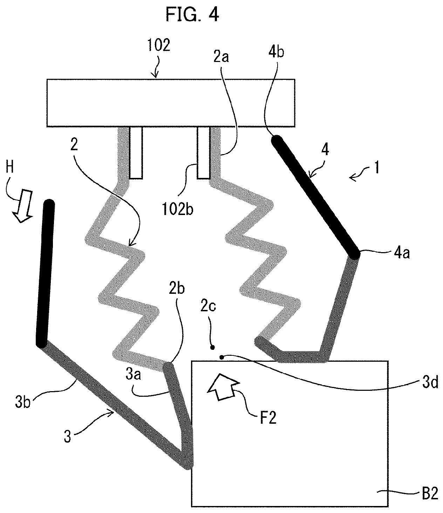

In the adsorption part 3, both the first adsorption part 3a and the second adsorption part 3b are made of an elastically deformable material. During non-adsorption of an article, the folded part 3c has a ring shape. Meanwhile, during adsorption of an article, the folded part 3c can appropriately change its shape from the ring shape in accordance with elastic deformation of the first adsorption part 3a and/or elastic deformation of the second adsorption part 3b (see, for example, Fig. 4, which will be explained later).

The adsorption part 3 has an opening 3d at its end part that is closer to the pad attachment part 102, which is opposite to the folded part 3c. The opening 3d communicates sequentially with the opening 2c of the suction part 2 and the suction port 102a of the pad attachment part 102, and thus can suck an article during adsorption of the article.

### Configuration of Shape Maintaining Part

The shape maintaining part 4 is made of, for example, a material that is the same as that of the adsorption part 3. The shape maintaining part 4 is arranged around the suction part 2, and is configured to maintain the shape of the second adsorption part 3b during non-adsorption of an article. The shape maintaining part 4 may be configured to have higher rigidity than the adsorption part 3.

Specifically, the shape maintaining part 4 is made of, for example, an elastically deformable resin material (e.g., a silicone resin) that is the same as that of the adsorption part 3. The shape maintaining part 4 is formed integrally with the adsorption part 3. Further, as illustrated in Fig. 2, the shape maintaining part 4 has a first end 4a that is connected to the second adsorption part 3b of the adsorption part 3 and that has a ring shape. Moreover, the shape maintaining part 4 is provided so as to have a decreasing diameter with its increasing distance from the second adsorption part 3b. Furthermore, the shape maintaining part 4 has a second end 4b that is formed in a ring shape and has a predetermined thickness, in order to impart higher rigidity to the shape maintaining part 4 than the adsorption part 3.

During non-adsorption of an article, the second end 4b of the shape maintaining part 4, which is a tip part thereof, is separated from the pad attachment part 102. Consequently, during non-adsorption of an article, the shape maintaining part 4 is in a floating state without being in contact with the pad attachment part 102, as described above. Consequently, during adsorption of an article, the adsorption part 3 can be more easily elastically deformed in accordance with the article.

In the configuration discussed in the above description, the shape maintaining part 4 is made of the same material as that of the adsorption part 3. However, there is no particular limitation on the shape maintaining part 4 of the present disclosure, as long as it can maintain the shape of the second adsorption part 3b during non-adsorption of an article. The shape maintaining part 4 may alternatively be made of a material different from that of the adsorption part 3. Specifically, the shape maintaining part 4 may be made of a member such as a metal material, for example.

However, the shape maintaining part 4 having higher rigidity than the adsorption part 3 is preferable, since such a shape maintaining part 4 can reliably maintain the shape of the adsorption part 3 in its initial shape illustrated in Fig. 2 while the adsorption part 3 is not adsorbing an article. In other words, in a case where the adsorption part 3 is elastically deformed to adsorb an article and thereafter the adsorption state of the article is released, the shape maintaining part 4 is preferable, since the shape maintaining part 4 can reliably restore the shape of the second adsorption part 3b, accordingly the shape of the adsorption part 3, to the shape before adsorption (initial shape) thanks to the higher rigidity of the shape maintaining part 4 compared to that of the adsorption part 3.

### Example Operation of Adsorption Pad

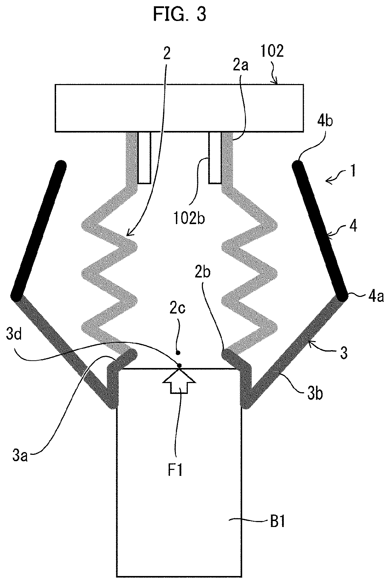

Next, the following will specifically describe, with reference to Figs. 3 and 4, example operation of the picking head provided with the adsorption pad 1 of the first embodiment. Fig. 3 is a sectioned end view illustrating example operation of the adsorption pad 1. Fig. 4 is a sectioned end view illustrating another example operation of the adsorption pad 1.

As illustrated in Fig. 3, in the adsorption pad 1, the adsorption part 3 adsorbs an article B1, which has a rectangular parallelepiped shape, such that the opening 3d of the adsorption part 3 includes an upper surface of the article B1. In this case, in the adsorption part 3, the first adsorption part 3a and the second adsorption part 3b are elastically deformed along left and right side surfaces of the article B1 so as to be in close contact with these side surfaces. Then, in the adsorption pad 1, the adsorption part 3 carries out evacuation through the opening 3d as shown by the arrow F1 in Fig. 3 so as to adsorb the article B1, and thus the adsorption part 3 can pull the article B1 upward.

As illustrated in Fig. 4, in the adsorption pad 1, the adsorption part 3 adsorbs an article B2, which has a rectangular parallelepiped shape, such that the opening 3d of the adsorption part 3 includes an upper surface and a left side surface of the article B2. In this case, in the adsorption part 3, the first adsorption part 3a and the second adsorption part 3b are elastically deformed along the upper surface and the left side surface of the article B2 so as to be in close contact with the upper surface and the left side surface. Then, in the adsorption pad 1, the adsorption part 3 carries out evacuation through the opening 3d as shown by the arrow F2 in Fig. 4 so as to adsorb the article B2, and thus the adsorption part 3 can pull the article B2 upward.

In the example illustrated in Fig. 4, the first adsorption part 3a and the second adsorption part 3b adsorb the upper surface and the left side surface of the article B2, and accordingly an exterior shape of the adsorption pad 1 is brought into a tilted posture with respect to the pad attachment part 102. However, in the adsorption pad 1 of the first embodiment, the shape maintaining part 4 is in a floating state with respect to the pad attachment part 102, and accordingly the second end 4b of the shape maintaining part 4 is displaced in accordance with the elastic deformation of the adsorption part 3, as shown by the obliquely downward arrow H in Fig. 4. Furthermore, the displacement of the shape maintaining part 4 takes place without hindering the elastic deformation of the adsorption part 3 (i.e., the adsorption operation of the article B2).

As described above, the configuration of the adsorption part 3 enlarges an adsorption surface of the adsorption pad 1 and accordingly a contact area of the adsorption pad 1 with respect to the article B2, and, at the same time, the configuration of the adsorption part 3 makes it difficult for the adsorption pad 1 to return to its original shape after the elastic deformation. Thus, the shape maintaining part 4, which is arranged around the suction part 2, is configured to pull the end part of the second adsorption part 3b inward, and the pulling force of the shape maintaining part 4 acts as a restoring force. Thus, even when the adsorption part 3 is elastically deformed, the adsorption part 3 can easily return to its original shape.

As described above, the adsorption pad 1 of the first embodiment includes the suction part 2 that has a cylindrical bellows shape and that has the first end 2a connected to the pad attachment part 102. The adsorption pad 1 further includes the adsorption part 3 that is connected to the second end 2b of the suction part 2, which is opposite to the first end 2a, and that adsorbs an article. The adsorption part 3 has (a) the first adsorption part 3a that is connected to the second end 2b of the suction part 2 and that has an increasing diameter with its increasing distance from the suction part 2 and (b) the second adsorption part 3b that is folded at and extends from the first adsorption part 3a toward the pad attachment part 102 and that has an increasing diameter with its increasing distance from the first adsorption part 3a. The adsorption pad 1 further includes the shape maintaining part 4 that is connected to the second adsorption part 3b of the adsorption part 3 so as to be arranged around the suction part 2 and that maintains the shape of the second adsorption part 3b during non-adsorption of an article. The article holding device 100 of the first embodiment further includes the adsorption pad(s) 1 and the pad attachment part(s) 102 provided with the suction port 102a.

In the adsorption pad 1 and the article holding device 100 of the first embodiment configured as above, the adsorption part 3 can be easily elastically deformed in accordance with an article so as to easily adsorb the article, as illustrated in Figs. 3 and 4. Consequently, the adsorption pad 1 and the article holding device 100 of the first embodiment can achieve improved adsorbability with respect to an article.

In the adsorption pad 1 of the first embodiment, the shape maintaining part 4 is in a floating state with respect to the pad attachment part 102 during non-adsorption of an article. Therefore, during adsorption of an article, the adsorption part 3 can be more easily elastically deformed in accordance with the article, thereby more easily adsorbing the article. Consequently, the adsorption pad 1 of the first embodiment can achieve further improved adsorbability with respect to an article.

In the adsorption pad 1 of the first embodiment, the shape maintaining part 4 is provided so as to have a decreasing diameter with its increasing distance from the second adsorption part 3b. Consequently, it is possible to easily reduce the size of the shape maintaining part 4, and accordingly reduce the size of the adsorption pad 1. Further, since the shape maintaining part 4 has a shape having a decreasing diameter as described above, the shape maintaining part 4 itself can achieve enhanced rigidity.

### Second Embodiment

The following will describe a second embodiment of the present disclosure. For convenience of description, members having identical functions to those described in the first embodiment are given identical reference numerals, and description thereof is omitted.

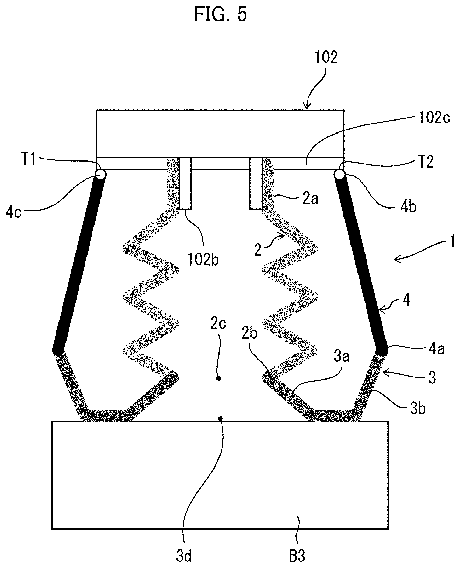

Fig. 5 is a sectioned end view illustrating (a) an example configuration of a main part of an adsorption pad 1 and a pad attachment part 102 according to the second embodiment of the present disclosure and (b) example operation thereof. Referring to Fig. 5, a main difference between the second embodiment and the first embodiment is that the second embodiment has a conductive ring 4c provided at a second end 4b of a shape maintaining part 4.

In Fig. 5, the adsorption pad 1 of the second embodiment includes the ring 4c that serves as a conductive member and that is provided closer to the second end 4b of the shape maintaining part 4. As will be described later, the ring 4c is configured to be separable from (i.e., capable of coming into contact with) the pad attachment part 102 in accordance with displacement of the shape maintaining part 4 which may occur in conjunction with elastic deformation of an adsorption part 3.

The article holding device 100 of the second embodiment includes a detection member 102c that is provided to a surface of the pad attachment part 102 which surface is closer to the adsorption pad 1. The detection member 102c employs a conductive material (e.g., a copper wire) capable of being electrically conducted with the ring 4c.

The detection member 102c is connected with, for example, a detector (not illustrated) that detects a resistance value. The article holding device 100 of the second embodiment is further provided with a control section (not illustrated) for the detector. The control section is configured to be capable of detecting, by detecting a change in a resistance value from the detector, whether or not the shape maintaining part 4 has come into contact with the detection member 102c.

Specifically, during non-adsorption of an article, the shape maintaining part 4 is in a floating state with respect to the pad attachment part 102, as illustrated in Fig. 2. In this case, the ring 4c is not in contact with the detection member 102c. Therefore, in the article holding device 100 of the second embodiment, the control section detects that a detection result from the detector has not changed from a predetermined initial value. Then, in the article holding device 100 of the second embodiment, the control section can determine, on the basis of the detection result, that the ring 4c and the detection member 102c are not in contact with each other and accordingly the control section can determine that the adsorption pad 1 is not adsorbing an article.

Furthermore, in the article holding device 100 of the second embodiment, in a case where the control section determines that an article is not being adsorbed, the control section can operate the base part 101 so that the adsorption pad 1 can adsorb an article.

Meanwhile, during adsorption of an article, for example, a second adsorption part 3b exerts an upward pulling force on an upper surface of an article B3, as illustrated in Fig. 5. As a result, in the adsorption pad 1, the adsorption part 3 adsorbs the article B3 by carrying out evacuation through the opening 3d, and accordingly is brought into a state where the adsorption part 3 can pull the article B3 upward. In this case, as illustrated in Fig. 5, the shape maintaining part 4 is displaced toward the pad attachment part 102 in accordance with upward elastic deformation of the adsorption part 3, so that the ring 4c comes into contact with the detection member 102c at the locations respectively indicated by "T1" and "T2" in Fig. 5, for example.

As a result, in the article holding device 100 of the second embodiment, the control section detects that a detection result from the detector has changed from the predetermined initial value. In other words, the control section determines that the resistance value detected by the detector changes from the initial value due to contact of the ring 4c with respect to the detection member 102c. Then, in the article holding device 100 of the second embodiment, the control section can determine, on the basis of the detection result, that the ring 4c and the detection member 102c are in contact with each other, and the control section can determine that the adsorption pad 1 is adsorbing an article.

Moreover, in the article holding device 100 of the second embodiment, the control section stops the operation of the base part 101, thereby stopping the operation of the adsorption pad 1 approaching the article, for example, the lifting/lowering operation. Furthermore, since the control section determines that the adsorption pad 1 is adsorbing the article, the control section can start carrying out evacuation through the suction port 102a and start the operation of the adsorption pad 1 adsorbing the article.

With the above configuration, the second embodiment brings about the same effects as those of the first embodiment.

Further, in the adsorption pad 1 of the second embodiment, the shape maintaining part 4 is provided with the ring 4c separable from the pad attachment part 102. Consequently, it is possible to detect whether or not the adsorption part 3 has come into contact with an article. Thus, it is possible to accurately determine whether or not the adsorption part 3 has adsorbed an article.

Furthermore, in the article holding device 100 of the second embodiment, the pad attachment part 102 includes the detection member 102c that detects contact of the shape maintaining part 4. Consequently, it is possible to detect that the shape maintaining part 4 has been displaced so as to come into contact therewith, thereby making it possible to detect whether or not the adsorption part 3 has come into contact with an article. Consequently, it is possible to accurately determine whether or not the adsorption part 3 has adsorbed an article.

As described above, the second embodiment employs the configuration in which the shape maintaining part 4 changes its position in accordance with elastic deformation of the adsorption part 3 to make the shape maintaining part 4 function as an indirect contact detection means of the adsorption pad 1 with respect to an article. Consequently, the second embodiment can easily provide an article holding device 100 which is low in cost, accordingly a picking device which is low in cost, compared to a configuration provided with an imaging means such as a camera for detecting contact of the adsorption pad 1 with respect to an article.

Moreover, in the article holding device 100 of the second embodiment, the operation of the pad attachment part 102 (i.e., the picking head) is stopped after it is determined that the adsorption pad 1 has come into contact with an article. Thus, it is possible to prevent or reduce excessive contact of the adsorption pad 1 with the article, thereby making it possible to prevent or reduce occurrence of damage or the like of the article that may occur due to the excessive contact.

However, depending on the shape, material, or the like of the article, the adsorption pad 1 may be moved toward the article by a predetermined distance (e.g., approximately several mm) after it is determined that the adsorption pad 1 has come into contact with an article. In this case, it is possible to improve the performance of the adsorption pad 1 adsorbing an article, which makes it easier to transfer an article having a relatively large weight or the like.

Other than the configuration described above, the following configuration is also possible. That is, detection of whether or not the detection member 102c and the ring 4c are in contact with each other is made on the basis of a change in electrical characteristics other than the change in resistance value, for example, on the basis of a change in a value of electric power (a voltage value and/or a current value) supplied to the detection member 102c or a change in dielectric constant of the detection member 102c.

Other than the configuration described above, the following configuration is also possible. That is, the pad attachment part 102 may be provided with a detection member that detects proximity of the shape maintaining part 4 by using an electromagnetic method, for example. Alternatively, the pad attachment part 102 may be provided with, as a detection member, a sensor element such as a proximity sensor or a pressure-sensitive sensor.

### Modification of Second Embodiment

The following will describe a modification of the second embodiment of the present disclosure. For convenience of description, members having identical functions to those described in the second embodiment are given identical reference numerals, and description thereof is omitted.

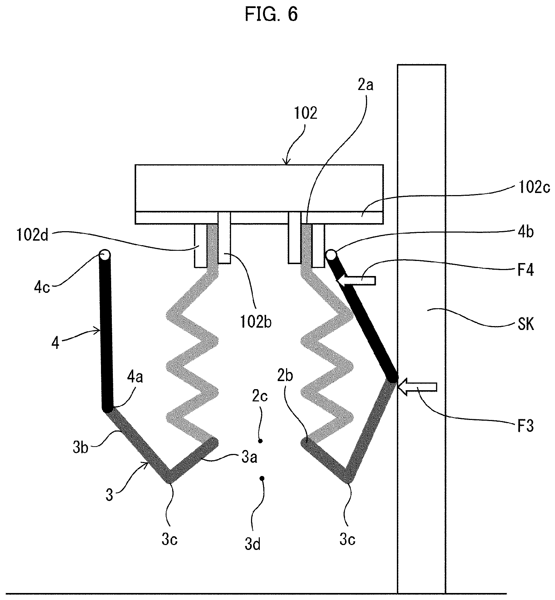

Fig. 6 is a sectioned end view illustrating (a) an example configuration of a main part of a modification of the pad attachment part shown in Fig. 5 and (b) example operation thereof. Referring to Fig. 6, a main difference between the modification of the second embodiment and the second embodiment is that the modification of the second embodiment includes a lateral detection member 102d that detects lateral displacement of the adsorption pad 1.

As illustrated in Fig. 6, in an article holding device 100 of this modification, the lateral detection member 102d, which has a cylindrical shape, is provided to a pad attachment part 102. Similarly to a detection member 102c, the lateral detection member 102d is made of a conductive material (e.g., a copper wire) capable of being electrically conducted with a ring 4c. Further, similarly to the attachment member 102b, the lateral detection member 102d is provided so as to protrude toward a side opposite to a base part, and is in contact with an outer peripheral surface of a suction part 2. In the article holding device 100 of this modification, as illustrated in Fig. 6, it is possible to detect that the adsorption pad 1 has come into contact with, for example, a side wall of a container in which an article is housed.

Specifically, in a case where the adsorption pad 1 comes into contact with the side wall of the container, a force acts on the adsorption pad 1 from the side wall and accordingly the adsorption pad 1 is elastically deformed, as shown by the arrow F3 in Fig. 6. In other words, the adsorption pad 1 is elastically deformed in a lateral direction that is orthogonal to a vertical direction, which is a direction in which the adsorption pad 1 is attached to the pad attachment part 102, that is, the adsorption pad 1 is elastically deformed in a left-right direction on the drawing. Consequently, in the adsorption pad 1, the shape maintaining part 4 is displaced as illustrated by the arrow F4 in Fig. 6 along with the elastic deformation in the left-right direction, so that the ring 4c comes in contact with the lateral detection member 102d. As a result, in the article holding device 100 of this modification, the control section can determine that the adsorption pad 1 has come into contact with the side wall and/or the like before the adsorption part 3 adsorbs an article.

Furthermore, in the article holding device 100 of this modification, in a case where the control section determines that the adsorption pad 1 has come into contact with the side wall and/or the like, the control section determines that an abnormal operation has been carried out. This makes it easy for the article holding device 100 of this modification to carry out the following operation. That is, the control section notifies occurrence of the abnormal operation to a display section (not illustrated) or the like, and further stops the operation of the article holding device 100 (picking device); alternatively, the control section continues the operation of the adsorption pad 1 adsorbing the article, without stopping the operation of the article holding device 100 (picking device).

### Modifications of Adsorption Pad

The following will describe modifications of the adsorption pad 1 of the present disclosure. For convenience of description, members having identical functions to those described in the first embodiment are given identical reference numerals, and description thereof is omitted.

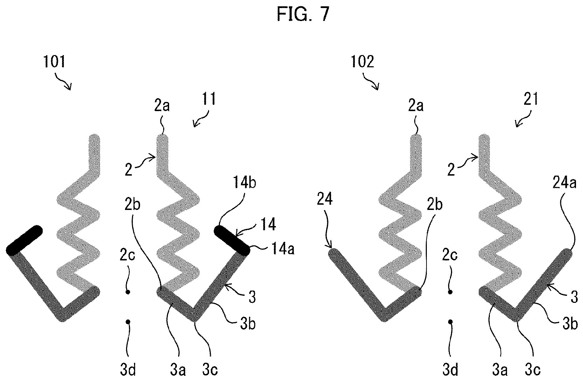

Fig. 7 is a sectioned end view illustrating example configurations of main parts of adsorption pads 11 and 21 according to first and second modifications. Referring to the view indicated by "101" in Fig. 7, a main difference between the first modification and the first embodiment is that a shape maintaining part 14 of the first modification protrudes toward a pad attachment part 102 to a smaller degree. Further, referring to the view indicated by "102" in Fig. 7, a main difference between the second modification and the first embodiment is that a shape maintaining part 24 of the second modification only includes an end part 24a of a second adsorption part 3b.

As illustrated in the view indicated by "101" in Fig. 7, in the adsorption pad 11 of the first modification, a shape maintaining part 14 has a first end 14a that has a ring shape and that is connected to a second adsorption part 3b of an adsorption part 3. Further, the shape maintaining part 14 is provided so as to have a decreasing diameter with its increasing distance from the second adsorption part 3b, and has a second end 14b that has a ring shape having a predetermined thickness in order that the shape maintaining part 14 can attain higher rigidity than the adsorption part 3.

Furthermore, unlike the first embodiment, the first modification is configured such that, in the adsorption pad 11, a vertical dimension of the shape maintaining part 14 is approximately a half of a vertical dimension of the suction part 2. As discussed above, the adsorption pad 11 of the first modification is configured such that the shape maintaining part 14 has a short dimension, which can prevent or reduce hindrance of elastic deformation of the adsorption part 3 that may occur due to contact with the pad attachment part 102.

As illustrated in the view indicated by "102" in Fig. 7, in an adsorption pad 21 of the second modification, the shape maintaining part 24 does not have a decreasing diameter with its increasing distance from the second adsorption part 3b, and has an end part 24a connected to a second adsorption part 3b of an adsorption part 3. The end part 24a has a ring shape having a predetermined thickness in order that the shape maintaining part 24 can attain higher rigidity than the adsorption part 3.

Furthermore, in the adsorption pad 21 of the second modification, the shape maintaining part 24 is constituted only by the end part 24a connected to the end part of the second adsorption part 3b. This can simplify the configuration of the adsorption pad 21.

Aspects of the present invention can also be expressed as follows:
An adsorption pad according to a first aspect of the present disclosure is an adsorption pad that is attached to a pad attachment part having a suction port, the pad attachment part being included in an article holding device that holds an article, the adsorption pad including: a suction part that has a first end connected to the pad attachment part and that has a cylindrical bellows shape; an adsorption part that is connected to a second end of the suction part which second end is opposite to the first end and that adsorbs an article, the adsorption part having (a) a first adsorption part that is connected to the second end of the suction part and that has an increasing diameter with its increasing distance from the suction part and (b) a second adsorption part that is folded at and extends from the first adsorption part toward the pad attachment part and that has an increasing diameter with its increasing distance from the first adsorption part; and a shape maintaining part connected to the second adsorption part of the adsorption part so as to be arranged around the suction part, the shape maintaining part maintaining a shape of the second adsorption part during non-adsorption of the article.

According to the above configuration, the adsorption part having the first adsorption part and the second adsorption part is provided to the suction port of the article holding device. Further, since the shape maintaining part maintains the shape of the second adsorption part during non-adsorption of an article, the adsorption part can be easily elastically deformed in accordance with an article, thereby easily adsorbing the article. Consequently, it is possible to improve the adsorbability with respect to an article.

A second aspect of the present disclosure is the adsorption pad according to the first aspect that may be configured such that: during non-adsorption of the article, the shape maintaining part is separated from the pad attachment part.

According to the above configuration, during non-adsorption of an article, the shape maintaining part is in a floating state with respect to the pad attachment part. Therefore, during adsorption of an article, the adsorption part can be more easily elastically deformed in accordance with the article, thereby more easily adsorbing the article. Consequently, it is possible to further improve the adsorbability with respect to an article.

A third aspect of the present disclosure is the adsorption pad according to the first or second aspect that may be configured such that: the shape maintaining part is provided so as to have a decreasing diameter with its increasing distance from the second adsorption part.

According to the above configuration, it is possible to easily reduce the size of the shape maintaining part, and accordingly to reduce the size of the adsorption pad.

A fourth aspect of the present disclosure is the adsorption pad according to any one of the first to third aspects that may be configured such that: the shape maintaining part has higher rigidity than the adsorption part.

According to the above configuration, since the rigidity of the shape maintaining part is higher than the rigidity of the adsorption part, the shape maintaining part can reliably maintain the adsorption part while the adsorption part is not adsorbing an article.

A fifth aspect of the present disclosure is the adsorption pad according to any one of the first to fourth aspects that may be configured such that: the shape maintaining part is provided with a conductive member separable from the pad attachment part.

According to the above configuration, use of the conductive member makes it possible to detect whether or not the adsorption part has come into contact with an article. Consequently, it is possible to accurately determine whether or not the adsorption part has adsorbed an article.

An article holding device according to a sixth aspect of the present disclosure is an article holding device that includes a pad attachment part having a suction port, the article holding device including an adsorption pad, the adsorption pad including a suction part that has a first end connected to the pad attachment part and that has a cylindrical bellows shape, an adsorption part that is connected to a second end of the suction part which second end is opposite to the first end and that adsorbs an article, the adsorption part having (a) a first adsorption part that is connected to the second end of the suction part and that has an increasing diameter with its increasing distance from the suction part and (b) a second adsorption part that is folded at and extends from the first adsorption part toward the pad attachment part and that has an increasing diameter with its increasing distance from the first adsorption part; and a shape maintaining part connected to the second adsorption part of the adsorption part so as to be arranged around the suction part, the shape maintaining part maintaining a shape of the second adsorption part during non-adsorption of the article.

According to the above configuration, it is possible to provide an article holding device having improved adsorbability with respect to an article.

A seventh aspect of the present disclosure is the article holding device according to the sixth aspect that may be configured such that: the pad attachment part is provided with a detection member that detects proximity or contact of the shape maintaining part.

According to the above configuration, the detection member can detect that the shape maintaining part has been displaced so as to come into proximity or contact, which makes it possible to detect whether or not the adsorption part has come into contact with an article. Consequently, it is possible to accurately determine whether or not the adsorption part has adsorbed an article.

The present disclosure is not limited to the embodiments above, but can be altered by a skilled person in the art within the scope of the claims. The present disclosure also encompasses, in its technical scope, any embodiment derived by combining technical means disclosed in differing embodiments as appropriate.

### Reference Signs List

1, 11, 21: Adsorption pad
2: Suction part
2a: First end
2b: Second end
3: Adsorption part
3a: First adsorption part
3b: Second adsorption part
4: Shape maintaining part
4c: Ring (conductive member)
100: Article holding device
102: Pad attachment part
102a: Suction port
102c: Detection member

## Claims

1. An adsorption pad that is attached to a pad attachment part having a suction port, the pad attachment part being included in an article holding device that holds an article, the adsorption pad comprising:
a suction part that has a first end connected to the pad attachment part and that has a cylindrical bellows shape;
an adsorption part that is connected to a second end of the suction part which second end is opposite to the first end and that adsorbs an article, the adsorption part having (a) a first adsorption part that is connected to the second end of the suction part and that has an increasing diameter with its increasing distance from the suction part and (b) a second adsorption part that is folded at and extends from the first adsorption part toward the pad attachment part and that has an increasing diameter with its increasing distance from the first adsorption part; and
a shape maintaining part connected to the second adsorption part of the adsorption part so as to be arranged around the suction part, the shape maintaining part maintaining a shape of the second adsorption part during non-adsorption of the article.

2. The adsorption pad according to claim 1, wherein:
during non-adsorption of the article, the shape maintaining part is separated from the pad attachment part.

3. The adsorption pad according to claim 1, wherein:
the shape maintaining part is provided so as to have a decreasing diameter with its increasing distance from the second adsorption part.

4. The adsorption pad according to claim 1, wherein:
the shape maintaining part has higher rigidity than the adsorption part.

5. The adsorption pad according to any one of claims 1 to 4, wherein:
the shape maintaining part is provided with a conductive member separable from the pad attachment part.

6. An article holding device that includes a pad attachment part having a suction port, the article holding device comprising an adsorption pad,
the adsorption pad including
a suction part that has a first end connected to the pad attachment part and that has a cylindrical bellows shape,
an adsorption part that is connected to a second end of the suction part which second end is opposite to the first end and that adsorbs an article, the adsorption part having (a) a first adsorption part that is connected to the second end of the suction part and that has an increasing diameter with its increasing distance from the suction part and (b) a second adsorption part that is folded at and extends from the first adsorption part toward the pad attachment part and that has an increasing diameter with its increasing distance from the first adsorption part; and
a shape maintaining part connected to the second adsorption part of the adsorption part so as to be arranged around the suction part, the shape maintaining part maintaining a shape of the second adsorption part during non-adsorption of the article.

7. The article holding device according to claim 6, wherein:
the pad attachment part is provided with a detection member that detects proximity or contact of the shape maintaining part.
